# EUROPÄISCHE PATENTSCHRIFT

(11) **EP 0 714 423 B1**
(45) Veröffentlichungstag und Bekanntmachung des Hinweises auf die Patenterteilung: **03.12.1997**
(21) Anmeldenummer: 94922231.9
(22) Anmeldetag: 06.08.1994
(51) Int. Cl.: C09D 11/02, B41M 1/10

(54) **ILLUSTRATIONSTIEFDRUCKFARBE**
PHOTOGRAVURE ILLUSTRATION PRINTING INK
ENCRE POUR IMPRESSION D'ILLUSTRATIONS EN HELIOGRAVURE

(30) Priorität: 13.08.1993 DE 4327196; 08.10.1993 DE 4334348
(43) Veröffentlichungstag der Anmeldung: 05.06.1996
(73) Patentinhaber: DRUCKFARBENFABRIK GEBR. SCHMIDT, D-60489 Frankfurt (DE)
(72) Erfinder: SCHÖN, Winfried, D-60488 Frankfurt (DE); SCHÜRMANN, Gerd, D-61462 Königstein (DE); GUTT, Reinhard, D-65549 Limburg (DE)
(74) Vertreter: Pfeifer, Hans-Peter, Dr., Dr. H.-P. Pfeifer Dr. P. Jany, Patentanwälte
(86) Internationale Anmeldenummer: DE9400922
(87) Internationale Veröffentlichungsnummer: WO9505424

(56) Entgegenhaltungen:
- EP-A- 0 112 465
- WO-A-94/13747
- DERWENT ACCESSION No. 91-027 069, Questel Telesystems (WPIL), DERWENT PUBLICATIONS LTD., London; & JP-A-02 298 559 (TOYO INK. MFG KK.),

## Beschreibung

Die Erfindung betrifft eine Illustrationstiefdruckfarbe für Druckereierzeugnisse.

Illustrationstiefdruckfarben sind dünnflüssige Zubereitungen aus Farbmitteln, Bindemitteln, Hilfsstoffen und Lösemitteln. Sie dienen zum Bedrucken von Papier (ausnahmsweise auch dünnen Kartons) in Rotationstiefdruckmaschinen. Dabei nimmt ein rotierender Zylinder, in dessen Oberfläche das Druckbild in Form kleiner, rasterartig angeordneter Näpfchen eingraviert oder geätzt ist, Druckfarbe aus einer flachen Wanne auf. Bereits nach etwa einer Viertel Drehung wird die überschüssige Druckfarbe, welche zunächst auch die nicht druckenden Stellen der Zylinderoberfläche benetzt, durch eine scharfe Rakel abgestreift. Nach etwa einer weiteren Viertel Drehung wird die Zylinderoberfläche gegen eine Papierbahn gepreßt, wobei mit der Druckfarbe das Druckbild aus den Näpfchen auf das Papier übertragen wird. Gleich danach durchläuft die Bahn eine mit angewärmter Luft betriebene Trocknungsanlage, in der das Lösemittel sehr schnell verdampft wird, so daß die getrocknet auf dem Papier zurückbleibende Druckfarbenschicht sofort einen für die Weiterverarbeitung fertigen Druck bildet. Je nach Anzahl der zu druckenden Farben sind mehrere derartige Druckwerke hintereinander geschaltet.

Im Illustrationstiefdruckverfahren werden heutzutage in der laufenden Produktion Bahngeschwindigkeiten von 12 bis 15 m/s erreicht und stundenlang eingehalten. Die Drucke sind, wie vorstehend angedeutet, sofort fertig. Die Bildwiedergabe ist besser als bei anderen Druckverfahren. Dieses hochentwickelte Verfahren wird vor allem zur Herstellung großer Stückzahlen von illustrierten Zeitschriften und Katalogen angewandt. Es unterscheidet sich insofern wesentlich vom Verpackungstiefdruck mit im allgemeinen anderen Bedruckstoffen, Druckfarben und Stückzahlen sowie erheblich geringeren Bahngeschwindigkeiten.

Verständlicherweise werden für die besonders hohen Anforderungen beim Illustrationstiefdruck spezielle hochentwickelte Druckfarben gebraucht. Sie müssen im Druck die genau richtige Farbtönung wiedergeben, müssen technisch handhabbar und dennoch schnelltrocknend sein, müssen möglichst stark glänzende (bei Bedarf auch matte) und fehlerfreie Druckfarbenschichten bilden und müssen stundenlang bei sehr hohen Papierbahngeschwindigkeiten störungsfrei laufen. Extrem sind vor allem die Anforderungen an die Trocknungsgeschwindigkeit. Aus den oben angegebenen Bahngeschwindigkeiten und den üblichen Abständen zwischen den Druckwerken für die verschiedenen Farben einer Druckmaschine ergibt sich, daß die Druckfarbe in Bruchteilen einer Sekunde so weit getrocknet sein muß, daß sie nicht nachklebt.

Als Lösemittel dient ganz überwiegend und in Deutschland seit etwa 40 Jahren im allgemeinen ausschließlich Toluol, genauer Reintoluol DIN 16513. Es ist in besonderem Maße für Illustrationstiefdruckfarben geeignet. Sein Siedepunkt liegt hoch genug für eine Handhabung bei atmosphärischen Bedingungen und niedrig genug für eine rasche Trocknung. Es hat ein gutes Lösevermögen. Es läßt sich aus dem die Trocknungsanlage verlassenden Luft-Toluoldampf-Gemisch relativ leicht wiedergewinnen. Es ist in ausreichenden Mengen erhältlich. In der Zusammensetzung von druckfertigen Illustrationstiefdruckfarben bildet es den größten Anteil (üblicherweise etwa 70 bis 80 %).

Als Bindemittel werden hochschmelzende (Schmelzband 140°C bis 180°C) toluollösliche Hartharze eingesetzt, insbesondere Kolophoniumderivate, wie Resinate und resol- oder maleinatmodifizierte Harzester, sowie Kohlenwasserstoffharze. In manchen Fällen und in relativ kleinen Mengenanteilen werden hochmolekulare Filmbildner, wie Celluloseether oder Chlorkautschuk, als zusätzliche Bindemittel mitverwendet. Der Bindemittelanteil liegt üblicherweise bei 10 % bis 30 %. Alle diese Bindemittel sind praktisch nichtflüchtig.

Als Farbmittel werden ganz überwiegend und zumeist ausschließlich feinteilige, in der Bindemittelflüssigkeit (Mischung aus Lösemittel und Bindemittel) praktisch unlösliche Feststoffe eingesetzt, vor allem organische Buntpigmente und Farbruße. Ihr Anteil liegt in der Regel bei 5 % bis 15 %.

Als in geringen Mengenanteilen (meist weniger als 3 %) anwesende Hilfsstoffe sind vor allem Netzmittel und Wachse zu nennen.

Diese Illustrationstiefdruckfarben sind als eine Spezialzubereitung für einen eng spezialisierten Zweck im Verlauf der letzten Jahrzehnte so hoch entwickelt und so weit optimiert worden, daß nach allgemeiner Ansicht kein Spielraum mehr für wesentliche Änderungen besteht.

In jüngerer Zeit wurde jedoch zunehmend beanstandet, daß in den fertigen Illustrationstiefdruck-Erzeugnissen noch ein geringer Gehalt von nicht verdampftem Toluol nachzuweisen ist. Dessen Menge hängt von der Dicke der aufgebrachten getrockneten Druckfarbenschicht bzw. der übereinandergedruckten Schichten, vom gedeckten Flächenanteil sowie von den nach dem Verlassen der Trocknungsanlage herrschenden Lagerungsbedingungen ab. Der Gehalt von Toluol im gedruckten Exemplar hängt zusätzlich deutlich vom eingesetzten Bedruckstoff ab. Nach allgemeiner Ansicht sind allenfalls graduelle Verminderungen der Restlösemittelgehalte zu erwarten, falls man im Rahmen des technisch Vernünftigen die Bauweise und/oder die Betriebsbedingungen der Trocknungsanlage ändern würde.

Es ist bekannt, daß sich von der Zusammensetzung der Tiefdruckfarben her graduell geringere Restlösemittelgehalte erreichen lassen, wenn im Bindemittel ein Teil der Harze durch einen Anteil hochmolekularer Filmbildner ersetzt wird. Diese Maßnahme ist aber nur begrenzt anwendbar, weil bei höherem Anteil solcher Filmbildner die Laufeigenschaften in der Druckmaschine sowie die Qualität der Druckfarbenschichten verschlechtert werden (unruhiges Liegen, verminderter Glanz, verminderte Farbstärke).

Toluoltiefdruckfarben oder Flexodruckfarben zur Reduzierung des Resttoluolgehaltes von hergestellten Drucken werden in der nicht vorpublizierten WO 94/13747 beschrieben.

Es wurde nunmehr gefunden, daß durch bestimmte Zusätze zur Druckfarbe der Gehalt an im Druck zurückbleibendem Toluol unter sonst vergleichbaren Bedingungen erheblich vermindert werden kann.

Das Problem des Restlösemittelgehaltes in Druckerzeugnissen wird gemäß einem ersten Hauptaspekt der Erfindung durch eine Illustrationstiefdruckfarbe nach Anspruch 1 gelöst.

Dabei enthält die Illustrationstiefdruckfarbe vorzugsweise einen Anteil von 2 Gew.% bis 5 Gew.%, besonders bevorzugt 2 Gew.% bis 4 Gew.%, des mindestens einen nichttrocknenden oder halbtrocknenden Fettsäureesters.

Die Begriffe "nichttrocknend oder halbtrocknend" sind in der in der Fachwelt üblichen Bedeutung zu verstehen, wie sie beispielsweise in dem Buch "Die Fette und Öle" von K. Braun und Th. Klug, Verlag Walter de Gruyter & Co, Berlin, 1950, Seiten 4,5 und 89 bis 123, erläutert werden. Diese Eigenschaft ist in der Regel verknüpft mit einem geringen Anteil von höchstens ein oder zwei Doppelbindungen in der Fettsäurekette. Vorzugsweise kommen nur solche Fettsäureester zum Einsatz, die höchstens zwei Doppelbindungen in ihrem Säurerest enthalten, wobei diese Doppelbindungen nicht konjugiert sein dürfen.

In der Praxis werden selbstverständlich technische Fettsäureester-Produkte eingesetzt, die in der Regel Gemenge aus Substanzen mit (im Rahmen des technisch Üblichen) unterschiedlichen chemischen Strukturen sind, beispielsweise eine gewisse Bandbreite hinsichtlich der Kettenlänge der Fettsäurereste enthalten. Die oben gemachten Angaben hinsichtlich des prozentualen Anteils beziehen sich jeweils auf den Gesamtgehalt an Fettsäureestern, die die angegebenen Merkmale aufweisen. Soweit die technischen Produkte andere Bestandteile enthalten, bleiben diese bei der Bestimmung der Menge der erfindungsgemäß zugesetzten Fettsäureester unberücksichtigt.

Bei Zimmertemperatur flüssige Fettsäureester sind im Vergleich zu festen Fettsäureestern bevorzugt. Falls der Fettsäurerest gänzlich oder überwiegend gesättigt ist, also keine oder nur wenige Doppelbindungen enthält, ergibt sich eine flüssige Konsistenz durch ein relativ niedriges Molekulargewicht (vorzugsweise unter 800). Ein solches niedriges Molekulargewicht haben beispielsweise Fettsäureester, deren alkoholische Komponente einwertig ist. Auch die Veresterung mehrwertiger Alkohole mit höchstens zwei Fettsäureresten führt in der Regel zu Molekulargewichten unter 800 und einer flüssigen Konsistenz.

Beispiele für praktisch einsetzbare bevorzugte Fettsäureester sind Fettsäurealkylester, insbesondere soweit die Alkylgruppe 2 bis 10 Kohlenstoffatome hat, besonders bevorzugt ist Butylstearat. Daneben sind in der Natur vorkommende Fette und Öle wie z.B. Olivenöl ebenfalls vorteilhaft einsetzbar.

Gemäß einem zweiten Hauptaspekt der Erfindung wird das Problem des Restlösemittelgehaltes in Druckerzeugnissen durch eine Illustrationstiefdruckfarbe nach Anspruch 6 gelöst. Dabei enthält die Illustrationstiefdruckfarbe vorzugsweise einen Anteil von 1 Gew.% bis 5 Gew.%, besonders bevorzugt 1,5 Gew.% bis 4,5 Gew.% des in Toluol löslichen mittelsiedenden Kohlenwasserstofföls. Der Begriff "mittelsiedend" wird hier in Anlehnung an die Begriffsbildung der Mineralöltechnik für Kohlenwasserstofföle angewandt, die höher sieden als Toluol und niedriger als die Vakuumdestillate.

Die zusätzlich in die Rezeptur der Illustrationstiefdruckfarbe aufgenommenen Kohlenwasserstofföle können einzeln oder kombiniert verwendet werden. Bevorzugt liegt ihr Siedebereich zwischen 210 °C und 310°C.

Der Anilinpunkt des erfindungsgemäß zugesetzten Kohlenwasserstofföls beträgt mindestens 60 °C, besonders bevorzugt mindestens 72 °C. Er wird bestimmt, indem man das Kohlenwasserstofföl mit Anilin mischt und erhitzt, bis eine einzige klare Phase entsteht. Danach wird langsam abgekühlt. Der Anilinpunkt ist die Temperatur, bei der beim Abkühlen die Entmischung stattfindet. Näheres ist der Norm DIN 51775 zu entnehmen.

Bisher war es herrschende Auffassung, daß für Illustrationstiefdruckfarben als Bindemittel möglichst hochschmelzende Harze verwendet werden müssen, weil diese das Lösemittel besonders schnell abgeben und zugleich in extrem kurzer Zeit eine feste und nicht nachklebende Schicht bilden. Im Gegensatz zu dieser allgemeinen Tendenz wird durch den erfindungsgemäßen Zusatz zweifellos der Schmelz- und Erweichungsbereich des gesamten Bindemittels zumindest anfangs erniedrigt. Dennoch werden im Rahmen der Erfindung vollständig befriedigende technische Eigenschaften der Druckfarbe hinsichtlich der erforderlichen Lösemittelabgabe und schnellen Trocknung (Vermeidung von Nachkleben) erreicht, wobei jedoch gleichzeitig erheblich weniger Toluol im frisch getrockneten Druck wiederzufinden ist.

In einer bevorzugten Ausführungsform wird die Rezeptur durch den Einsatz der obengenannten hochmolekularen Filmbildner in einer Menge von 1 bis 9 Gew.%, bezogen auf die Menge der Hartharze, modifiziert. Dabei ist im Falle der Fettsäureester gemäß dem ersten Hauptaspekt der Erfindung eine Menge von 3 Gew.% bis 9 Gew.% besonders bevorzugt, während im Falle der Kohlenwasserstofföle gemäß dem zweiten Hauptaspekt der Erfindung der Anteil des hochmolekularen Filmbildners besonders bevorzugt zwischen 1 und 5 Gew.% liegt. Dadurch wird der Gehalt an im Druckerzeugnis wiederzufindendem Toluol nochmals erniedrigt, wobei ein synergistischer Effekt erreicht wird, d.h. die Wirkung der Kombination aus hochmolekularem Filmbildner und erfindungsgemäßen Zusätzen ist besser, als wenn nur eine dieser Substanzen in einer entsprechenden Menge eingesetzt wird.

Die nachfolgenden Beispiele verdeutlichen die Erfindung, ohne sie darauf zu beschränken.

### Beispiel 1

Zur Herstellung eines Vergleichsproduktes nach dem Stand der Technik wurden 200 g Blaupigment Phthalocyanin in 1000 g Bindemittellösung, bestehend aus 500 g Kohlenwasserstoffharz (Schmelzband 150 bis 170° C) und 500 g Toluol vordispergiert und dann in einer Rührwerkskugelmühle fein vermahlen. Diesem Ansatz wurden 500 g der gleichen Bindemittellösung sowie 600 g Toluol zugemischt. Die resultierende druckfertige Illustrationstiefdruckfarbe wurde mittels einer Labortiefdruckmaschine auf ein Illustrationstiefdruckpapier (100 g/m2 LWC = light weight coated) gedruckt.

Bei den Laborversuchen wurde auf eine Warmlufttrocknung verzichtet. Die resultierenden generell höheren Gehalte an wiederzufindendem Toluol erlauben eine bessere Differenzierung des Einflusses der Druckfarbenzusammensetzung. Die die Labor-Tiefdruckmaschine verlassenden Andrucke wurden in genau eingehaltenen Zeittakten wie folgt behandelt: Sie wurden 30 sec bei Zimmertemperatur offen gelagert. Dann wurde mittels Schablone eine 5 mal 3 cm große Probe ausgeschnitten. Diese wurde sofort in ein Probefläschchen verbracht und luftdicht verschlossen. Der Gehalt an wiederzufindendem Toluol wurde gaschromatographisch nach der Headspace-Methode bestimmt.

Bei fünf in gleicher Weise mit der vorstehenden Rezeptur durchgeführten Versuchen wurde an Toluol als Mittelwert 150 mg/m² Druck wiedergefunden.

### Beispiel 2

Die Rezeptur gemäß Beispiel 1 (Stand der Technik) wurde durch Zumischen von 3 Gew.% Olivenöl modifiziert. Nach der in Beispiel 1 erläuterten Prüfmethode ergab sich (wiederum als Mittelwert aus fünf Versuchen) 80 mg/m² restliches Toluol.

### Beispiel 3

Die Rezeptur gemäß Beispiel 1 (Stand der Technik) wurde durch Zumischen von 3 Gew.% Butylstearat modifiziert. Nach der in Beispiel 1 erläuterten Prüfmethode ergab sich (wiederum als Mittelwert aus fünf Versuchen) 80 mg/m² restliches Toluol.

### Beispiel 4 bis Beispiel 6

In den Beispielen 4 bis 6 wurden der Rezeptur von Beispiel 1 unterschiedliche Mengen Sojaöl zugemischt. Dabei ergaben sich (wiederum als Mittelwert aus fünf Versuchen) in Abhängigkeit von der Menge des Sojaöls die folgenden Mengen an restlichem Toluol:

| | | | |
|---|---|---|---|
| zugemischte Menge Sojaöl (Gew. %) | 2 % | 3 % | 4 % |
| mittlerer Toluolgehalt im frisch getrockneten Druck (mg/m²) | 106 | 84 | 68 |

### Beispiel 7

Entsprechend den Beispielen 2 bis 6 wurden die Drucke von vier untereinander modifizierten Illustrationstiefdruckfarben hinsichtlich der Anfangskonzentration an Toluol im Druck verglichen:

Die Ergebnisse sind in der nachfolgenden Tabelle 1 wiedergegeben. (1) bezeichnet darin eine Illustrationstiefdruckfarbe nach dem Stand der Technik. Bei dem Versuchsansatz (2) wurde nur Sojaöl und bei dem Versuchsansatz (3) nur ein hochmolekularer Filmbildner zugesetzt. (4) betrifft einen Versuchsansatz mit Sojaöl und hochmolekularem Filmbildner. Man erkennt die vorteilhafte Wirkung der kombinierten Anwendung dieser beiden Komponenten.

**Tabelle 1**

| Einsatzstoff | Gewichtsprozente | | | |
|---|---|---|---|---|
| | (1) | (2) | (3) | (4) |
| | | | | |
| Rotpigment Ca-verlackter Azofarbstoff | 8,3 | 8,3 | 8,3 | 8,3 |
| | | | | |
| Hartharze | 20,0 | 20,0 | 11,2 | 11,2 |
| Resolmodif.Naturharz (160-170) | | | | |
| + Kohlenwasserstoffharz (140-160) | | | | |
| + Ca-Zn-Resinat (160-180) | | | | |
| | | | | |
| Hochmolekularer Filmbildner Ethylcellulose | - | - | 0,9 | 0,9 |
| | | | | |
| Hilfsstoff Polyethylenwachs | 0,3 | 0,3 | 0,3 | 0,3 |
| | | | | |
| Toluol | 71,4 | 68,4 | 79,3 | 76,3 |
| | | | | |
| Sojaöl | - | 3,0 | - | 3,0 |
| | | | | |
| Im Druck wiedergefundenes Toluol mg/m² | 160 | 95 | 95 | 60 |

### Beispiel 8

Die Rezeptur gemäß Beispiel 1 wurde durch Zumischen von 3 Gew.% Kokosfett modifiziert. Dieses Fettsäureesterprodukt ist bei Zimmertemperatur fest. Nach der in Beispiel 1 erläuterten Prüfmethode ergab sich (wiederum als Mittelwert aus fünf Versuchen) 110 mg/m² restliches Toluol. Auch in diesem Fall wird also eine deutliche Senkung des Rest-Toluol-Gehaltes erreicht, wenn auch weniger ausgeprägt als bei den flüssigen Fettsäureester-Produkten.

### Beispiel 9

Die Rezeptur gemäß Beispiel 1 wurde durch Zumischen von 3 Gew.% Safloröl modifiziert. Dieses Fettsäureesterprodukt enthält konjugierte Doppelbindungen und wird den trocknenden Ölen zugerechnet. Nach der in Beispiel 1 erläuterten Prüfmethode ergab sich (wiederum als Mittelwert aus fünf Versuchen) 130 mg/m² restliches Toluol.

### Beispiel 10

Die Rezeptur gemäß Beispiel 1 wurde durch Zumischen von 3 Gew.% eines technischen Ölsäuremonoglycerids, wie es unter dem Markennamen Rilanit GMO (Henkel KGaA, Düsseldorf, Deutschland) erhältlich ist, modifiziert. Nach der in Beispiel 1 erläuterten Prüfmethode ergab sich 100 mg/m² restliches Toluol.

### Beispiel 11

Die Rezeptur des Beispiels 1 wurde durch Zumischen von 3 Gew.% eines langöligen Sojaalkyds, wie es unter dem Markennamen Rokraplast S 730 (Lackharzwerke Robert Kraemer GmbH, Delmenhorst, Deutschland) erhältlich ist, modifiziert. Nach der in Beispiel 1 erläuterten Prüfmethode ergab sich 100 mg/m² restliches Toluol.

### Beispiel 12

Unter produktionsähnlichen Bedingungen wurden auf einer 30 cm breiten Tiefdruckmaschine mit drei Druckwerken drei mal zwei Sätze von je drei für Farbdrucke gemeinsam zu verarbeitenden Illustrationstiefdruckfarben im Zusammendruck erprobt. Je 300 m Papierbahn (LWC 60 g/m²) wurden mit 100 m/min Rolle auf Rolle jeweils vollflächig bedruckt und unmittelbar in drei mit 60°C warmer Luft betriebenen Trockenanlagen mit jeweils nachgeschalteter Kühlvorrichtung getrocknet. Im frischen Druck wurden die Gehalte an restlichem Toluol sofort bestimmt, wie in Beispiel 1 beschrieben. Die Ergebnisse (in mg/m²) sind nachfolgend wiedergegeben:

| | Gelb + Rot + Blau | Rot + Blau + Schwarz |
|---|---|---|
| ohne Zusatz | 190 | 180 |
| mit 3 % Sojaöl | 140 | 130 |
| mit 3 % Butylstearat | 110 | 100 |

Verglichen mit den Ergebnissen einer solchen Versuchsanordnung, findet man erfahrungsgemäß bei der praktischen Produktion von Illustrationstiefdruck-Erzeugnissen erheblich weniger Toluol im frischen Druck wieder.

### Beispiel 13

Die Rezeptur gemäß Beispiel 1 (Stand der Technik) wurde durch Zumischen von 3 Gew.% eines Kohlenwasserstofföls mit einem Siedebereich von 238°C bis 273°C und einem Anilinpunkt von 92°C modifiziert. Nach der in Beispiel 1 erläuterten Prüfmethode ergab sich (wiederum als Mittelwert aus fünf Versuchen) 85 mg/m² restliches Toluol.

### Beispiel 14 bis Beispiel 16

In den Beispielen 14 bis 16 wurden unterschiedliche Mengen eines Kohlenwasserstofföls mit einem Siedebereich von 222°C bis 234°C und einem Anilinpunkt von 77°C der Rezeptur von Beispiel 1 zugemischt. Dabei ergaben sich (wiederum als Mittelwert aus fünf Versuchen) in Abhängigkeit von der Menge des mittelsiedenden Kohlenwasserstofföls die folgenden Mengen an restlichem Toluol:

| | | | |
|---|---|---|---|
| zugemischte Menge mittelsiedendes Kohlenwasserstofföl [Gew.%] | 2% | 3% | 4% |
| mittlerer Toluolgehalt im frisch getrockneten Druck [mg/m²] | 80 | 70 | 63 |

### Beispiel 17

Entsprechend den Beispielen 13 bis 16 wurden die Drucke von vier untereinander modifizierten Illustrationstiefdruckfarben hinsichtlich der Anfangskonzentration an Toluol im Druck verglichen.

Die Ergebnisse sind in der nachfolgenden Tabelle 2 wiedergegeben. (1) bezeichnet darin eine Illustrationstiefdruckfarbe nach dem Stand der Technik. Bei dem Versuchsansatz (2) wurde nur ein Kohlenwasserstofföl und bei dem Versuchsansatz (3) nur ein hochmolekularer Filmbildner zugesetzt. (4) betrifft einen Versuchsansatz mit Kohlenwasserstofföl und hochmolekularem Filmbildner. Man erkennt die außerordentlich vorteilhafte Wirkung der kombinierten Anwendung dieser beiden Komponenten.

**Tabelle 2**

| Einsatzstoff | Gewichtsprozente | | | |
|---|---|---|---|---|
| | (1) | (2) | (3) | (4) |
| | | | | |
| Rotpigment Ca-verlackter Azofarbstoff | 5,9 | 5,9 | 6,0 | 6,0 |
| | | | | |
| Hartharz Ca-Zn-Resinat | 27,5 | 27,5 | 15,6 | 15,6 |
| | | | | |
| Hochmolekularer Filmbildner Ethylcellulose | - | - | 0,4 | 0,4 |
| | | | | |
| Hilfsstoff Polyethylenwachs | 1,3 | 1,3 | 0,8 | 0,8 |
| | | | | |
| Toluol | 65,3 | 63,3 | 77,2 | 75,2 |
| | | | | |
| Mittelsiedendes Kohlenwasserstofföl; Siedebereich 295 bis 310°C; Anilinpunkt 83°C | - | 2,0 | - | 2,0 |
| | | | | |
| Im Druck wiedergefundenes Toluol; mg/m² | 100 | 70 | 70 | 35 |

## Patentansprüche

1. Illustrationstiefdruckfarbe zum Herstellen von Drucken mit reduziertem Resttoluolgehalt, enthaltend Farbmittel, Bindemittel auf Basis eines Hartharzes, Hilfsstoff und Toluol als flüchtiges Lösemittel, **dadurch gekennzeichnet**, daß sie einen Anteil von 1 Gew.% bis 8 Gew.% mindestens eines nichttrocknenden oder halbtrocknenden Fettsäureesters, mit Ausnahme von Rapsöl und Sojaöl, enthält, dessen Fettsäurerest 12 bis 20 Kohlenstoffatome hat.

2. Illustrationstiefdruckfarbe nach Anspruch 1, **dadurch gekennzeichnet**, daß der mindestens eine Fettsäureester bei Raumtemperatur flüssig ist.

3. Illustrationstiefdruckfarbe nach einem der vorhergehenden Ansprüche, **dadurch gekennzeichnet**, daß der Fettsäurerest des mindestens einen Fettsäureesters höchstens zwei Doppelbindungen aufweist, wobei die Doppelbindungen nicht konjugiert sind.

4. Illustrationstiefdruckfarbe nach einem der vorhergehenden Ansprüche, **dadurch gekennzeichnet**, daß der Anteil des mindestens einen Fettsäureesters 2 Gew.% bis 5 Gew.% beträgt.

5. Verwendung eines Fettsäureesters mit Ausnahme von Rapsöl und Sojaöl, der nichttrocknend oder halbtrocknend ist, dessen Fettsäurerest 12 bis 20 Kohlenstoffatome hat und der vorzugsweise bei Raumtemperatur flüssig ist, als Zusatz zu einer Toluol-haltigen Illustrationstiefdruckfarbe zur Reduktion des Resttoluolgehaltes in mit der Druckfarbe gedruckten Druckerzeugnissen.

6. Illustrationstiefdruckfarbe zur Herstellung von Drucken mit reduziertem Resttoluolgehalt, enthaltend Farbmittel, Bindemittel auf Basis eines Hartharzes, Hilfsstoff und Toluol als flüchtiges Lösemittel, **dadurch gekennzeichnet**, daß sie einen Anteil von 0,5 Gew.% bis 10 Gew.% eines in Toluol löslichen Kohlenwasserstofföls, mit Ausnahme von Printosol C800/AP73 und Pionier 6710SH, enthält, dessen Siedebereich bei Atmosphärendruck zwischen 180°C und 340°C und dessen Anilinpunkt bei mindestens 60°C liegt.

7. Illustrationstiefdruckfarbe nach Anspruch 6, **dadurch gekennzeichnet**, daß der Siedebereich zwischen 210°C und 310°C liegt.

8. Illustrationstiefdruckfarbe nach einem der Ansprüche 6 bis 7, **dadurch gekennzeichnet**, daß der Anilinpunkt des Kohlenwasserstofföls bei mindestens 72°C liegt.

9. Illustrationstiefdruckfarbe nach einem der Ansprüche 6 bis 8, **dadurch gekennzeichnet**, daß der Anteil des Kohlenwasserstofföls zwischen 1 Gew.% und 5 Gew.%, bevorzugt zwischen 1,5 Gew.% und 4,5 Gew.%, beträgt.

10. Verwendung eines Kohlenwasserstofföls, mit Ausnahme von Printosol C800/AP73 und Pionier 6710SH, mit einem Siedebereich zwischen 180°C und 340°C, vorzugsweise zwischen 210°C und 310°C und einem über 60°C, vorzugsweise über 72°C liegenden Anilinpunkt als Zusatz zu einer Toluol-haltigen Illustrationstiefdruckfarbe zur Reduktion des Resttoluolgehaltes in mit der Druckfarbe gedruckten Druckerzeugnissen.

11. Illustrationstiefdruckfarbe nach einem der vorhergehenden Ansprüche, **dadurch gekennzeichnet**, daß sie als flüchtiges Lösemittel ausschließlich Toluol enthält.

12. Illustrationstiefdruckfarbe nach einem der vorhergehenden Ansprüche, **dadurch gekennzeichnet**, daß sie einen hochmolekularen Filmbildner in einem Anteil von 1 Gew.% bis 9 Gew.%, bezogen auf die Menge des eingesetzten Hartharzes, enthält.

## Claims

1. Publication rotogravure ink for producing impressions with reduced residual toluene content, containing colouring agent, binder based on a hard resin, auxiliary substance and toluene as volatile solvent, characterized in that it contains a content of 1 wt.% to 8 wt.% of at least one non-drying or semi-drying fatty acid ester, with the exception of rapeseed oil and soya oil, whose fatty acid group has 12 to 20 carbon atoms.

2. Publication rotogravure ink according to Claim 1, characterized in that the at least one fatty acid ester is liquid at room temperature.

3. Publication rotogravure ink according to one of the preceding Claims, characterized in that the fatty acid group of the at least one fatty acid ester has no more than two double bonds, wherein the double bonds are not conjugated.

4. Publication rotogravure ink according to one of the preceding Claims, characterized in that the content of the at least one fatty acid ester is 2 wt.% to 5 wt.%.

5. Use of a fatty acid ester with the exception of rapeseed oil and soya oil, which is non-drying or semi-drying, whose fatty acid group has 12 to 20 carbon atoms and which is preferably liquid at room temperature, as addition to a publication rotogravure ink containing toluene to reduce the residual toluene content in printing house products printed with the printing ink.

6. Publication rotogravure ink for producing impressions with reduced residual toluene content, containing colouring agent, binder based on a hard resin, auxiliary substance and toluene as volatile solvent, characterized in that it contains a content of 0.5 wt.% to 10 wt.% of a hydrocarbon oil soluble in toluene, with the exception of Printosol C800/AP73 and Pionier 6710SH, whose boiling range at atmospheric pressure is between 180 °C and 340 °C and whose aniline point is at least 60 °C.

7. Publication rotogravure ink according to Claim 6, characterized in that the boiling range is between 210 °C and 310 °C.

8. Publication rotogravure ink according to one of Claims 6 to 7, characterized in that the aniline point of the hydrocarbon oil is at least 72 °C.

9. Publication rotogravure ink according to one of Claims 6 to 8, characterized in that the content of the hydrocarbon oil is between 1 wt.% and 5 wt.%, preferably between 1.5 wt.% and 4.5 wt.%.

10. Use of a hydrocarbon oil, with the exception of Printoscl C800/AP73 and Pionier 6710SH, with a boiling range between 180 °C and 340 °C, preferably between 210 °C and 310 °C and an aniline point above 60 °C, preferably above 72 °C, as addition to a publication rotogravure ink containing toluene to reduce the residual toluene content in printing house products printed with the printing ink.

11. Publication rotogravure ink according to one of the preceding Claims, characterized in that it contains exclusively toluene as volatile solvent.

12. Publication rotogravure ink according to one of the preceding Claims, characterized in that it contains a high-molecular film forming agent in a content of 1 wt.% to 9 wt.%, related to the quantity of the hard resin used.

## Revendications

1. Encre hélio-édition pour produire des impressions à teneur réduite en toluène résiduaire, cette encre contenant de la matière colorante, du liant à base d'une résine dure, de l'adjuvant et du toluène comme solvant volatil, encre caractérisée en ce qu'elle contient une proportion de 1% en poids à 8% en poids d'au moins un ester d'acide gras non siccatif ou semi-siccatif, à l'exclusion de l'huile de colza et de l'huile de soja, dont le reste acide gras comporte 12 à 20 atomes de carbone.

2. Encre hélio-édition selon la revendication 1, caractérisée en ce qu'au moins un ester d'acide gras est liquide à la température ambiante.

3. Encre hélio-édition selon l'une des revendications précédentes, caractérisée en ce que le reste acide gras d'au moins un ester d'acide gras présente au maximum deux doubles liaisons, les doubles liaisons n'étant pas conjuguées.

4. Encre hélio-édition selon l'une des revendications précédentes, caractérisée en ce que la proportion d'au moins un ester d'acide gras est de 2% en poids à 5% en poids.

5. Utilisation d'un ester d'acide gras, à l'exclusion de l'huile de colza et de l'huile de soja, qui n'est pas siccatif ou est semi-siccatif, dont le reste acide gras contient 12 à 20 atomes de carbone et qui est de préférence liquide à la température ambiante, comme additif à une encre hélio-édition, contenant du toluène, pour abaisser la teneur en toluène résiduaire dans les produits d'impression imprimées avec cette encre d'impression.

6. Encre hélio-édition pour produire des impressions à teneur réduite en toluène résiduaire, cette encre contenant de la matière colorante, du liant à base d'une résine dure, de l'adjuvant et du toluène comme solvant volatil, encre caractérisée en ce qu'elle contient une proportion de 0,5 % en poids à 10% en poids d'une huile d' hydrocarbure soluble dans le toluène, à l'exclusion de l'huile "Printosol C800/AP73" et de "Pionier 6710SH", dont le domaine d'ébullition à la pression atmosphérique se situe entre 180°C et 340°C et dont le point d'aniline vaut au moins 60°C .

7. Encre hélio-édition selon la revendication 6, caractérisée en ce que le domaine d'ébullition se situe entre 210°C et 310°C.

8. Encre hélio-édition selon l'une des revendications 6 à 7, caractérisée en ce que le point d'aniline de l'huile d' hydrocarbure vaut au moins 72°C.

9. Encre hélio-édition selon l'une des revendications 6 à 8, caractérisée en ce que la proportion de l'huile d' hydrocarbure se situe entre 1% en poids et 5% en poids, de préférence entre 1,5% en poids et 4,5% en poids.

10. Utilisation d'une huile d' hydrocarbure, à l'exclusion de "Printosol C800/AP73" et de "Pionier 6710SH, ayant un domaine d'ébullition compris entre 180°C et 340°C, avantageusement entre 210°C et 310°C, et ayant un point d'aniline supérieur à 60°C, avantageusement supérieur à 72°C, comme additif à une encre hélio-édition contenant du toluène afin de diminuer la teneur en toluène résiduaire dans les produits imprimés à l'aide de cette encre d'impression.

11. Encre hélio-édition, selon l'une des revendications précédentes, caractérisée en ce qu'elle contient, comme solvant volatil, exclusivement du toluène.

12. Encre hélio-édition, selon l'une des revendications précédentes, caractérisée en ce quelle contient une substance filmogène à poids moléculaire élevé, présente à une proportion de 1% à 9% en poids, par rapport à la quantité de la résine dure utilisée dans cette encre.
